# EUROPEAN PATENT SPECIFICATION

(11) **EP 3 590 783 B1**
(45) Date of publication and mention of the grant of the patent: **19.04.2023**
(21) Application number: 19182815.1
(22) Date of filing: 27.06.2019
(51) Int. Cl.: B61D 19/02

(54) **PINCH DETECTION SENSOR**
EINKLEMMERKENNUNGSSENSOR
CAPTEUR DE DÉTECTION DE PINCEMENT

(30) Priority: 02.07.2018 JP 2018125807
(43) Date of publication of application: 08.01.2020
(73) Proprietor: Proterial, Ltd., Tokyo 135-0061 (JP)
(72) Inventor: KAWASE, Kenji, Tokyo 108-8224 (JP); SUZUKI, Shuichi, Tokyo 108-8224 (JP)
(74) Representative: Betten & Resch

(56) References cited:
- EP-A2- 1 575 068
- WO-A1-2006/087131
- CH-A5- 688 354
- DE-U1-202004 006 968
- FR-A1- 2 944 503
- JP-B2- 5 227 299

## Description

### BACKGROUND OF THE INVENTION

### 1. FIELD OF THE INVENTION

The present invention relates to a pinch detection device for detecting the occurrence of pinch during closing of a sliding door.

### 2. DESCRIPTION OF THE RELATED ART

Conventionally, in a train vehicle doorway to allow passenger entry and exit, there are provided one pair of sliding doors that slide in train vehicle front and rear directions. Such train vehicle sliding doors are provided with a structure for detecting the occurrence of passenger's body or belongings pinch in the sliding doors during closing of the sliding doors (see, e.g., JP-A-2017-89247).

The door pinch detecting device described in JP-A-2017-89247 includes hollow door front edge rubber outer members, which are attached to front edges in closing movement directions of sliding doors, respectively, of a train vehicle, door front edge rubber inner members, which are insertably and removably accommodated in hollow portions of the door front edge rubber outer members respectively, and piezoelectric members, which are fixed to front edge portions of the door front edge rubber inner members, respectively, to act as a foreign object detection sensor. When foreign object pinch in the sliding doors occurs, the piezoelectric members transduce the deformation of the door front edge rubber inner members into an electric signal and output that electric signal, which is amplified and sent to an alarm device to generate an alarm. In response to that alarm, a trainman then opens the sliding doors to remove the pinched object.

Further, in the door pinch detecting device described in JP-A-2017-89247, front edge portions of the door front edge rubber outer members in the movement directions of the sliding doors during closing of the sliding doors are formed in an arch shape, with gaps being formed between inner surfaces of the front edge portions of the door front edge rubber outer members and perimeters of the piezoelectric members, respectively. The cushionabilities of the door front edge rubber outer members are then ensured by those gaps, resulting in impact relaxation when the door front edge rubber outer members collide with a passenger's body during closing of the sliding doors.

WO 2006/087131 A1 discloses a pinch detection device according to the preamble of claim 1.

### SUMMARY OF THE INVENTION

Now, in the sliding doors of the train vehicle, not only passenger's body pinch but also thin string-like object, passenger's wear, etc. pinch may occur. The string-like object pinch in the sliding doors may be caused, for example by passenger exiting from the train vehicle while carrying belongings with a main body object such as a pass case for holding cards being coupled to a tip of a string-like object. In such an event, in the door pinch detecting device described in JP-A-2017-89247, when the widths of the spaces between the inner surfaces of the front edge portions of the door front edge rubber outer members and the piezoelectric members in the one pair of sliding doors are greater than the width and thickness of the foreign object, the piezoelectric members may be acted on by no pressure, and no detection of occurrence of pinch may be able to be performed.

Accordingly, it is an object of the present invention to provide a pinch detection device with enhanced pinch detection accuracy during closing of sliding doors.

For the purpose of solving the above-described problem, the present invention provides a pinch detection device, for detecting the occurrence of pinch during closing of one pair of sliding doors, as defined in claim 1. The dependent claims define embodiments of the invention.

### Points of the invention

The pinch detection device according to the present invention makes it possible to detect the occurrence of pinch in the sliding doors with higher accuracy.

### BRIEF DESCRIPTION OF THE DRAWINGS

**FIG. 1** is an explanatory view showing a train vehicle doorway with a pinch detection device according to an embodiment of the present invention attached to one pair of sliding doors thereof;
**FIG. 2** is a cross-sectional view showing the pinch detection device;
**FIG. 3** is a perspective view showing a pressure sensitive sensor **5**;
**FIG. 4**A is a cross-sectional view showing a holding member and its surroundings in a natural condition when acted on by no pressure;

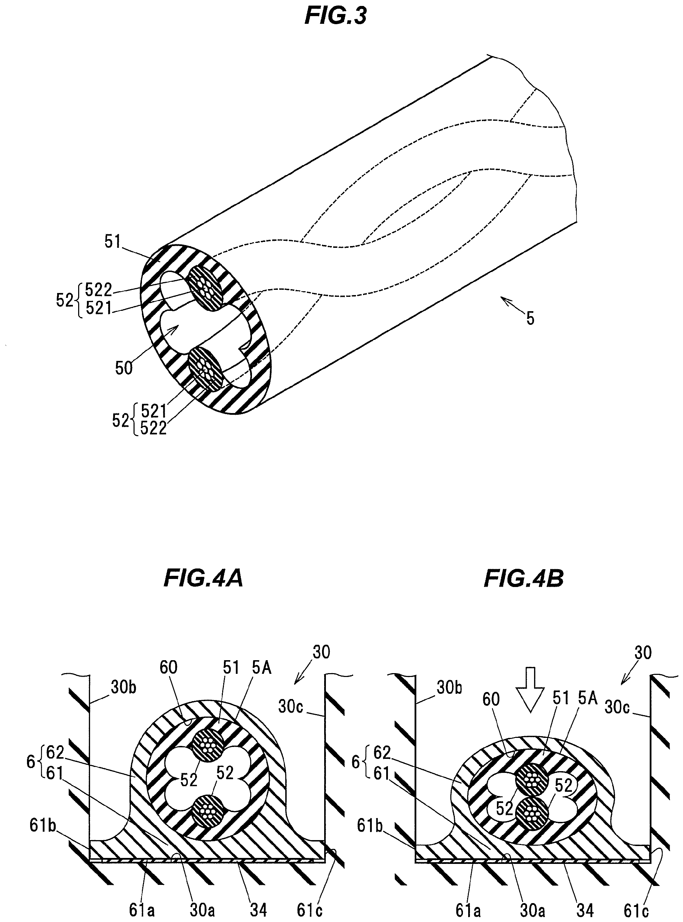

**FIG. 4**B is a cross-sectional view showing the holding member and its surroundings in a compressed condition when acted on by a pressure;

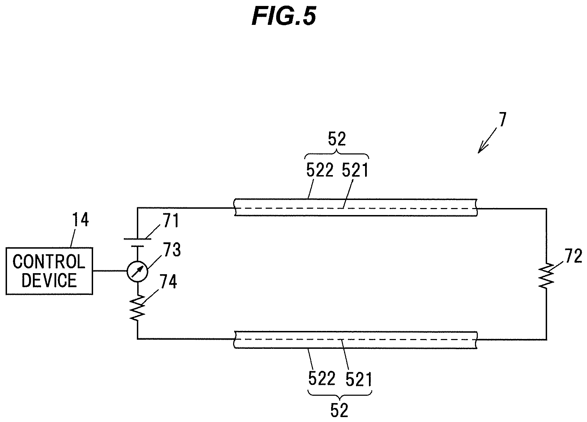

**FIG. 5** is a circuit diagram showing one example of an electric circuit for detecting the occurrence of pinch in the sliding doors with a pressure sensitive sensor;

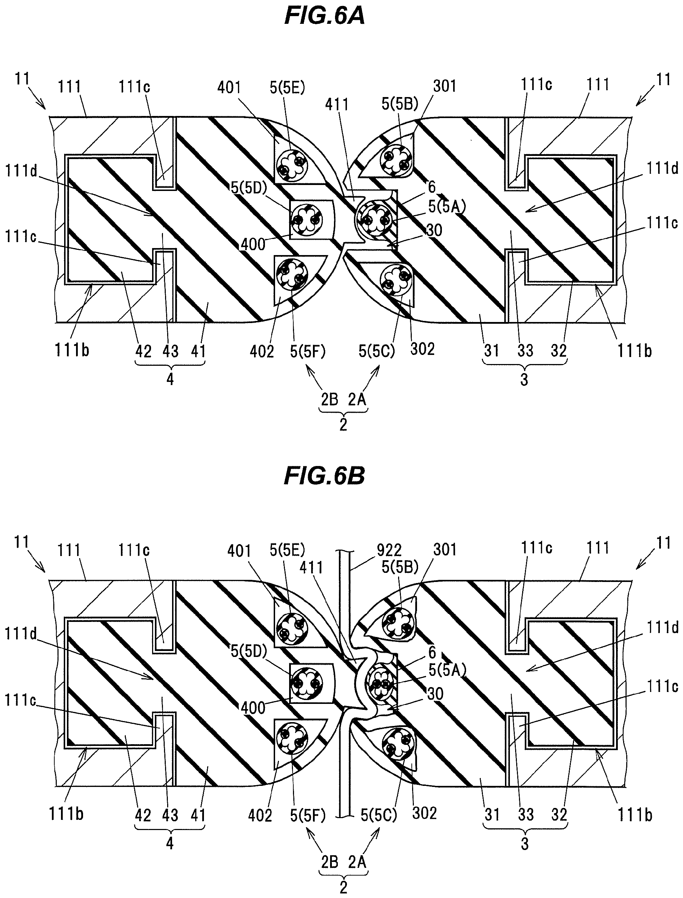

**FIG. 6**A shows the sliding doors closed without occurrence of pinch; and
**FIG. 6**B shows the sliding doors closed with a string-like object of belongings being pinched therein during closing of the sliding doors.

### DETAILED DESCRIPTION OF THE PREFERRED EMBODIMENTS

### [First Embodiment]

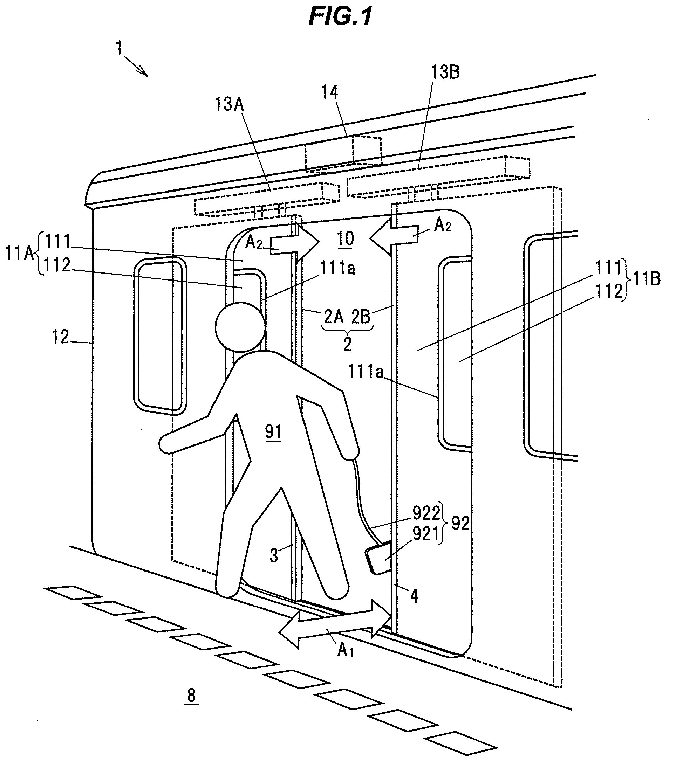

**FIG. 1** is an explanatory view showing a doorway **10** of a train vehicle **1** with a pinch detection device **2** according to an embodiment of the present invention being attached to one pair of left and right sliding doors **11**A and **11**B of that doorway **10**. In **FIG. 1**, there are shown a passenger **91** exiting from the train vehicle **1** to a station platform **8** and belongings **92** of the passenger **91.** Further, in **FIG. 1**, entry and exit directions of the passenger **91** are indicated by arrows A₁, while moving directions (closing movement directions) during closing of the sliding doors **11**A and **11**B are indicated by arrows A₂.

The moving directions of the sliding doors **11**A and **11**B are parallel to a forward movement direction of the train vehicle **1.** The entry and exit directions of the passenger **91** are perpendicular to the forward movement direction of the train vehicle **1** and parallel to thickness directions of the sliding doors **11**A and **11**B. The sliding doors **11**A and **11**B each include a respective door plate **111** and a respective window glass **112** fitted in a respective window section **111**a of the respective door plate **111.**

The belongings **92** include, for example, a main body object **921** such as a pass case for holding cards, and a string-like object **92** which is being coupled to the main body object **921** at one end thereof. The other end of the string-like object **92** is being gripped by the passenger **91.** Note that the other end of the string-like object **92** may be suspended by a belt or the like of the passenger **91**, for example.

By driving devices **13**A and **13**B which are provided in a vehicle body **12**, the sliding doors **11**A and **11**B are slid in front and rear directions of the vehicle body **12** to open and close the doorway **10.** The driving devices **13**A and **13**B are being disposed above the doorway **10**, and are being configured to include a respective linear motion mechanism such as a linear motor and a ball screw, for example. The driving devices **13**A and **13**B are controlled by a control device **14.** The movement ranges (the positions of forward and backward movement ends) of the sliding doors **11**A and **11**B are defined by stoppers (not shown) which are provided in the driving devices **13**A and **13**B.

The pinch detection device **2** includes a first pinch detection sensor **2**A, which is attached to one sliding door **11**A, and a second pinch detection sensor **2**B, which is attached to the other sliding door **11**B. The first and second pinch detection sensors **2**A and **2**B are being vertically attached to respective edge portions of the sliding doors **11**A and **11**B, and during closing of the sliding doors **11**A and **11**B, in the event of pinch of the passenger **91** or their belongings **92** therebetween, the first and second pinch detection sensors **2**A and **2**B detect that occurrence of pinch. When the control device **14** receives a signal indicating that occurrence of pinch from the pinch detection device **2**, the control device **14** controls the driving devices **13**A and **13**B to open the sliding doors **11A** and **11**B. Note that when the control device **14** receives a signal indicating the occurrence of pinch from the pinch detection device **2**, the control device **14** may generate an alarm signal to give an alarm to a trainman such as a driver or a conductor. In this case, the sliding doors **11**A and **11**B are opened by being operated by the trainman.

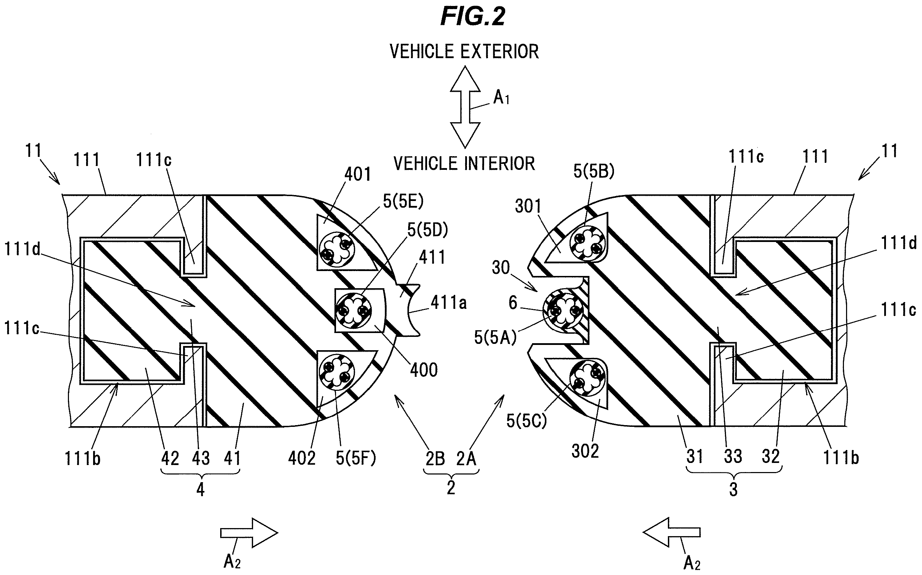

**FIG. 2** is a cross-sectional view showing the first and second pinch detection sensors **2**A and **2**B. In **FIG. 2**, the first and second pinch detection sensors **2**A and **2**B are indicated by cross sections parallel to the entry and exit directions A₁ of the passenger **91** and the closing movement directions A₂ of the sliding doors **11**A and **11**B (in other words, cross sections at right angles to longitudinal directions of the first and second pinch detection sensors **2**A and **2**B). Further, in **FIG. 2**, the upper side of the drawing corresponds to the vehicle exterior side (platform **8** side) of the train vehicle **1**, while the lower side of the drawing corresponds to the vehicle interior side.

The pinch detection device **2** includes a first door front edge rubber **3**, which is attached to the edge portion in the closing movement direction of one sliding door **11**A, and a second door front edge rubber **4**, which is attached to the edge portion in the closing movement direction of the other sliding door **11**B, and a plurality of pressure sensitive sensors **5**, which are sensitive to a pressure. The pressure sensitive sensors **5** are formed in a linear shape, and extend in the vertical directions of the sliding doors **11**A and **11**B.

In the present embodiment, the pinch detection device **2** is being provided with six pressure sensitive sensors **5**. Hereinafter, in order to distinguish each of these pressure sensitive sensors **5**, the six pressure sensitive sensors **5** are referred to as first to sixth pressure sensitive sensors **5**A to **5**F. Of the six pressure sensitive sensors **5**, the first to third pressure sensitive sensors **5**A to **5**C are being disposed for the first door front edge rubber **3**, while the fourth to sixth pressure sensitive sensors **5**D to **5** F are being disposed for the second door front edge rubber **4**.

Further, the pinch detection device **2** includes a holding member **6** made of an elastic body that holds the first pressure sensitive sensor **5**A. The holding member **6** is holding the first pressure sensitive sensor **5**A on an exterior of the first door front edge rubber **3.** The configurations of the pressure sensitive sensor **5** and the holding member **6** will be described later.

The door plates **111** of the sliding doors **11**A and **11**B are being vertically formed with respective mating grooves **111**b for attaching the first and second door front edge rubbers **3** and **4** respectively. The mating grooves **111**b are open in the closing movement directions of the sliding doors **11** through respective openings **111**d between respective one pairs of protruding pieces **111**c and **111**c opposite each other.

The first door front edge rubber **3** integrally includes a base section **31**, which is disposed in the closing direction of one sliding door **11A** relative to the one pair of protruding pieces **111**c and **111**c, a mating portion **32**, which is mated into the mating groove **111**b, and a connecting portion **33**, which connects the base section **31** and the mating portion **32**. Likewise, the second door front edge rubber **4** integrally includes a base section **41**, which is disposed in the closing direction of the other sliding door **11**B relative to the one pair of protruding pieces **111**c and **111**c, a mating portion **42,** which is mated into the mating groove **111**b, and a connecting portion **43**, which connects the base section **41** and the mating portion **42.** The first and second door front edge rubbers **3** and **4** are made of, for example, urethane rubber, EP rubber, silicone rubber, styrene butadiene rubber, chloroprene rubber, olefin based or styrene based thermoplastic elastomer, urethane resin or the like, and are formed by extrusion molding.

The first door front edge rubber **3** includes a recessed portion **30**, which is open toward the second door front edge rubber **4**, in an edge portion of the base section **31** in the closing movement direction of one sliding door **11**A and in a middle portion in the thickness direction of one sliding door **11**A. The holding member **6** is being disposed on a bottom of the recessed portion **30**. The second door front edge rubber **4** includes a protrusion **411**, which is mated into the recessed portion **30** of the first door front edge rubber 3 during closing of the one pair of sliding doors **11**A and **11**B. A tip surface **411**a of the protrusion **411** is being formed in a concave curve shape. The protrusion **411** including the tip surface **411**a is at least partially mated into the recessed portion **30**.

The first door front edge rubber **3** includes hollow spaces **301** and **302** in the vehicle exterior side and the vehicle interior side, respectively, relative to the recessed portion **30**. A second pressure sensitive sensor **5**B that is sensitive to a pressure from the vehicle exterior side relative to the recessed portion **30** is being disposed in the hollow space **301** in the vehicle exterior side. A third pressure sensitive sensor **5**C that is sensitive to a pressure from the vehicle interior side relative to the recessed portion **30** is being disposed in the hollow space **302** in the vehicle interior side.

The second door front edge rubber **4** includes a hollow space **400** in a rear position of the protrusion **411** in the closing movement direction of the other sliding door **11**B. Further, the second door front edge rubber **4** includes hollow spaces **401** and **402** in the vehicle exterior side and the vehicle interior side, respectively, relative to the rear position of the protrusion **411** in the closing movement direction of the other sliding door **11**B. Fourth to sixth pressure sensitive sensors **5**D to **5**F are being disposed in the hollow spaces **400**, **401**, and **402**, respectively. The fourth pressure sensitive sensor **5**D disposed in the hollow space **400** is sensitive to a pressure from the protrusion **411** in the event of pinch in the closing movement direction of the sliding door **11**B. The fifth pressure sensitive sensor **5**E disposed in the hollow space **401** in the vehicle exterior side is sensitive to a pressure from the vehicle exterior side relative to the protrusion **411**. The sixth pressure sensitive sensor **5**F disposed in the hollow space **402** in the vehicle interior side is sensitive to a pressure from the vehicle interior side relative to the protrusion **411**.

The second and fifth pressure sensitive sensors **5**B and **5**E are compressed, for example, in the event of passenger collision therewith from the vehicle exterior side during closing of the sliding doors **11**A and **11**B, while the third and sixth pressure sensitive sensors **5**C and **5**F are compressed, for example, in the event of passenger collision therewith from the vehicle interior side during closing of the sliding doors **11**A and **11**B.

**FIG. 3** is a perspective view showing the pressure sensitive sensor 5. The pressure sensitive sensor **5** includes a tube **51** which is formed of a tubular elastic body, and a plurality of conductor wires **52** which are spaced apart from each other in an inner side of that tube **51**. More specifically, two conductor wires **52** are being helically held on an inner surface of the tube **51** while being partially exposed, with a space **50** being formed in a central portion of the tube **51**. The tube **51** is made of, for example, an insulating rubber material such as silicone rubber or ethylene propylene rubber, and has such elasticity as to be deformed by being acted on by an external force, and restored immediately no external force is exerted.

In a natural condition of the tube **51** when acted on by no external force, the plurality of conductor wires **52** are being held in non-contact with each other with the space **50** therebetween. Further, the tube **51** when acted on by an external force is elastically deformed to bring the plurality of conductor wires **52** into contact with each other. In each of the conductor wires **52**, a metal stranded wire **521** with multiple metal wires stranded together is being covered with a conductive covering layer **522**. This structure allows the pressure sensitive sensor **5** to sense external pressure forces in all radial directions of the tube **51**.

Note that the number of conductor wires **52** held in the tube **51** is not limited to two, but may be four, for example. Further, although in the present embodiment, the six pressure sensitive sensors **5** are common in structure and size, they are not limited thereto, but for example, the first pressure sensitive sensor **5**A may be greater or smaller in diameter than the second to sixth pressure sensitive sensors **5**B to **5**F. Furthermore, the plurality of conductor wires **52** may not helically be held, but may be held parallel to each other and perpendicular to the pressure sensing directions. In this case, the conductor wires **52** may be formed in a band shape.

**FIG. 4**A is a cross-sectional view showing the holding member **6** and its surroundings in a natural condition when acted on by no pressure. **FIG. 4**B is a cross-sectional view showing the holding member **6** and its surroundings in a compressed condition when acted on by a pressure.

The holding member **6** is made of, e.g., urethane rubber, EP rubber, silicone rubber, styrene butadiene rubber, chloroprene rubber, olefin based or styrene based thermoplastic elastomer, urethane resin or the like, and the holding member **6** integrally includes a base section **61,** which is attached to a bottom surface **30a** of the recessed portion **30**, and a cylindrical holding portion **62**, which is formed with a hollow portion **60** in a central portion thereof. In the hollow portion **60**, the first pressure sensitive sensor **5**A is accommodated. In the illustrated example of **FIGS. 4**A and **4**B, the bottom surface **61**a of the base section **61** is fixed to the bottom surface **30a** of the recessed portion **30** with a double-sided tape **34.** It should be noted, however, that the base section **61** is not limited to this, but may be fixed with an adhesive, for example.

A thickness of the holding portion **62** is being formed thinner than thicknesses between inner surfaces of the hollow spaces **301** and **302** of the first door front edge rubber **3** and an outer surface of the first door front edge rubber **3.** This makes the first pressure sensitive sensor **5**A highly sensitive even to a slight pressure.

A width of the base section **61** in the thickness direction of the sliding door **11**A is wider than a width of the holding portion **62** in the same thickness direction, and the first pressure sensitive sensor **5**A is being positioned in the thickness direction of the sliding door **11**A by the base section **61.** In the illustrated example of **FIGS. 4A** and **4**B, side surfaces **30**b and **30**c of the recessed portion **30**, and end faces **61**b and **61**c of the base section **61**, which are facing those side surfaces **30**b and **30**c respectively, are in elastic contact with each other, but slight gaps may respectively be formed between the side surfaces **30**b and **30**c of the recessed portion **30** and the end faces **61**b and **61**c of the base section **61.**

Gaps are being formed between the holding portion **62** and the side surfaces **30**b and **30**c, respectively, of the recessed portion **30.** As shown in **FIG. 4**B, those gaps act as clearance spaces for the holding portion **62** when the holding member **6** is compressed. The first pressure sensitive sensor **5**A is sensitive to the pressure in the event of pinch in the sliding doors **11**A and **11**B, by being compressed by the holding member **6** being compressed from the opening side of the recessed portion **30**, in such a manner as to bring the plurality of conductor wires **52** into contact with each other.

**FIG. 5** is a circuit diagram showing one example of an electric circuit **7** for detecting the occurrence of pinch with the pressure sensitive sensor **5**. This electric circuit **7** is being configured to include the two conductor wires **52** of the pressure sensitive sensor **5**, and includes a power source **71**, a contact detection resistor **72** that connects together end portions of the two conductor wires **52**, an ammeter **73** and a current limitation resistor **74** that are connected in series with the power supply **71**. The ammeter **73** includes, for example, a current sensor such as a Hall IC and an amplifier, and its detection signal is output to the control device **14**.

In the electric circuit **7** configured as described above, when the pressure sensitive sensor **5** is compressed and the conductor wires **52** are brought into contact with each other, electric current to be detected by the ammeter **73** varies. The control device **14** recognizes the occurrence of pinch in the sliding doors **11A** and **11**B from the variation of the detection signal of the ammeter **73**, and stops or reverses the driving devices **13**A and **13**B.

Note that although in **FIG. 5** the electric circuit **7** is shown for only one pressure sensitive sensor **5**, since in the present embodiment, the pinch detection device **2** has the six pressure sensitive sensors **5**, each of the pressure sensitive sensors **5** is being provided with its respective electric circuit **7**, and the detection signals of the ammeters **73** of their respective electric circuits **7** are output to the control device **14**. The control device **14** when recognizing the occurrence of compression of any of the pressure sensitive sensors **5** reverses the driving devices **13**A and **13**B.

**FIG. 6**A shows the sliding doors **11**A and **11**B closed without occurrence of pinch. **FIG. 6**B shows the sliding doors closed with the string-like object **922** of the belongings **92** being pinched therein between the first and second door front edge rubbers **3** and **4** during closing of the sliding doors **11**A and **11**B.

As shown in **FIG. 6**A, when the sliding doors **11**A and **11**B are closed, the protrusion **411** of the second door front edge rubber **4** mates into the recessed portion **30** of the first door front edge rubber **3.** This results in enhancement in the vehicle interior airtightness of the train vehicle **1**, and besides, suppression of occurrence of rattling of the sliding doors **11**A and **11**B. Note that, with no pinch occurring, the tip surface **411a** of the protrusion **411** is not brought into contact with the holding member **6**, so the first pressure sensitive sensor **5**A is not pressed.

On the other hand, as shown in **FIG. 6**B, during closing of the sliding doors **11**A and **11**B, when the string-like object **922** of the belongings **92** is pinched therebetween, the string-like object **922** is pushed into the recessed portion **30** of the first door front edge rubber **3** by the protrusion **411** of the second door front edge rubber **4**, in such a manner as to compress the first pressure sensitive sensor **5**A held in the holding member **6.** This results in bringing the conductor wires **52** of the first pressure sensitive sensor **5**A into contact with each other, and detecting the occurrence of that pinch with the control device **14.** The control device **14**, when detecting the occurrence of that pinch with the first pressure sensitive sensor **5**A, controls the driving devices **13**A and **13**B to open the sliding doors **11**A and **11**B. This results in releasing the string-like object **922.**

### (Advantageous effects of the first embodiment)

According to the first embodiment described above, the following operations and advantageous effects (**1**) to (**3**) can be obtained.
(**1**) Since the first door front edge rubber **3** has the recessed portion **30** which is open toward the second door front edge rubber **4**, and the first pressure sensitive sensor **5**A is being disposed in the recessed portion **30**, for example when the string-like object **922** of the belongings **92** is pinched between the first door front edge rubber **3** and the second door front edge rubber **4**, the string-like object **922** is pushed into the recessed portion **30**, resulting in detecting the occurrence of that pinch. This allows the pinch detection with high accuracy. In addition, since the first pressure sensitive sensor **5**A is being arranged within the recessed portion **30**, the first pressure sensitive sensor **5**A is unlikely to detach from the first door front edge rubber **3** even when the passenger **91'** body or wear rubs against the front edge portion of the first door front edge rubber **3** during entry and exit.
(**2**) Since the first pressure sensitive sensor **5**A is being disposed within the recessed portion **30** by being held in the holding member **6** having the base section **61** fixed to the bottom surface **30**a of the recessed portion **30**, the first pressure sensitive sensor **5**A is securely held while being high precision positioned within the recessed portion **30**. In addition, because of the gaps between the holding portion **62** and the side surfaces **30**b and **30**c of the recessed portion **30**, the elastic deformation of the holding member **6** resulting from compression is not disrupted, so the pressure due to pinch is highly likely to be transmitted to the first pressure sensitive sensor **5**A.
(**3**) Since the second door front edge rubber **4** has the protrusion **411** to be mated into the recessed portion **30**, for example even when the thickness of a pinch detection target object such as the string-like object **922** of the belongings **92** or the passenger **91**' wear is thin, the detection target object is pushed into the recessed portion **30**, thereby making it possible to securely detect the occurrence of pinch in the sliding doors **11**A and **11**B.
(**4**) Since the pinch detection device **2** includes the second to sixth pressure sensitive sensors **5**B to **5**F as well as the first pressure sensitive sensor **5**A, the pinch detection device **2** is able to be sensitive to pressures from various directions.

### (Summary of the Embodiments)

Next, the technical ideas grasped from the above-described embodiments will be described with the aid of the reference characters and the like in the embodiments. It should be noted, however, that each of the reference characters in the following descriptions is not to be construed as limiting the constituent elements in the claims to the members and the like specifically shown in the embodiments.
[**1**] A pinch detection device (**2**), for detecting the occurrence of pinch during closing of one pair of sliding doors (**11**A, **11**B), comprising: a first door front edge rubber (**3**) to be attached to an edge portion in a closing movement direction of one sliding door (**11**A) of the one pair of sliding doors (**11A**, **11B**); and a second door front edge rubber (**4**) to be attached to an edge portion in a closing movement direction of an other sliding door (**11**B) of the one pair of sliding doors (**11**A, **11**B), wherein the first door front edge rubber (**3**) includes a recessed portion (**30**), which is open toward the second door front edge rubber (**4**), with a linear shape pressure sensitive sensor (**5A**), which is sensitive to a pressure in the event of pinch, being disposed in that recessed portion (**30**).
[**2**] The pinch detection device (**2**) according to [**1**] above, further including a holding member (**6**) comprising an elastic body with a hollow portion (**60**) therein, with the pressure sensitive sensor (**5A**) disposed in the recessed portion (**30**) being accommodated and held in that hollow portion (**60**), wherein the holding member (**6**) integrally includes a base section (**61**), which is attached to a bottom surface (**30a**) of the recessed portion (**30**) and a cylindrical holding portion (**62**), which is formed with the hollow portion (**60**) in a central portion thereof, with a width of the base section (**61**) in a thickness direction of the one sliding door (**11**A) being wider than a width of the holding portion (**62**) in the same thickness direction, with the pressure sensitive sensor (**5**A) being positioned in the thickness direction of the one sliding door (**11**A) by the base section (**61**), with gaps being formed between the holding portion (**62**) and side surfaces (**30**b, **30**c), respectively, of the recessed portion (**30**).
[**3**] The pinch detection device (**2**) according to the above [**1**] or [**2**], wherein the first door front edge rubber (**3**) includes a hollow space (**301**) in a vehicle exterior side relative to the recessed portion (**30**), with a linear shape pressure sensitive sensor (**5**B), which is sensitive to a pressure from the vehicle exterior side relative to the recessed portion (**30**), being disposed within that hollow space (**301**).
[**4**] The pinch detection device (**2**) according to any one of the above [**1**] to [**3**], wherein the first door front edge rubber (**3**) includes a hollow space (**302**) in a vehicle interior side relative to the recessed portion (**30**), with a linear shape pressure sensitive sensor (**5C**), which is sensitive to a pressure from the vehicle interior side relative to the recessed portion (**30**), being disposed within the hollow space (**302**).
[**5**] The pinch detection device (**2**) according to any one of the above [**1**] to [**4**], wherein the second door front edge rubber (**4**) includes a protrusion (**411**) to be at least partially mated into the recessed portion (**30**) during closing of the one pair of sliding doors (**11**A, **11**B).
[**6**] The pinch detection device (**2**) according to [**5**] above, wherein the second door front edge rubber (**4**) includes a hollow space (**400**) in a rear position of the protrusion (**411**) in the closing movement direction of the other sliding door (**11**B), with a linear shape pressure sensitive sensor (**5D**), that is sensitive to a pressure from the protrusion (**411**) in the event of pinch in that closing movement direction, being disposed within that hollow space (**400**).
[**7**] The pinch detection device (**2**) according to the above [**5**] or [**6**], wherein the second door front edge rubber (**4**) includes a hollow space (**401**) in the vehicle exterior side relative to a rear position of the protrusion (**411**) in the closing movement direction of the other sliding door (**11B**), with a linear shape pressure sensitive sensor (**5**E), that is sensitive to a pressure from the vehicle exterior side relative to the protrusion (**411**), being disposed within that hollow space (**401**).
[**8**] The pinch detection device (**2**) according to any one of the above [**5**] to [**7**], wherein the second door front edge rubber (**4**) includes a hollow space (**402**) in the vehicle interior side relative to the rear position of the protrusion (**411**) in the closing movement direction of the other sliding door (**11**B), with a linear shape pressure sensitive sensor (**5**F), that is sensitive to a pressure from the vehicle interior side relative to the protrusion (**411**), being disposed within that hollow space (**402**).

Although the embodiments of the present invention have been described above, the above described embodiments are not to be construed as limiting the inventions according to the claims. It should also be noted that not all combinations of the features described in the embodiments are indispensable to the means for solving the problem of the invention. For example, some or all of the second to sixth pressure sensitive sensors **5**B to **5**F may be omitted.

Further, the present invention can appropriately be modified and implemented without departing from the spirit thereof. For example, although in the above described embodiments, there has been described the case where the present invention is applied to the sliding doors **11** for opening and closing the doorway **10** of the train vehicle **1**, the present invention is not limited thereto, but may also be applied to, for example so-called home door sliding doors which are provided on the platform **8** and which are opened after arrival of the train vehicle **1** and closed before departure of the train vehicle **1**.

## Claims

1. A pinch detection device (2), for detecting the occurrence of pinch during closing of one pair of sliding doors (**11**A, **11**B), comprising:
a first door front edge rubber (**3**) to be attached to an edge portion in a closing movement direction of one sliding door (**11**A) of the one pair of sliding doors (**11**A, **11**B); and
a second door front edge rubber (**4**) to be attached to an edge portion in a closing movement direction of another sliding door (**11**B) of the one pair of sliding doors (**11**A, **11**B),
wherein the first door front edge rubber (**3**) includes a recessed portion (**30**), which is open toward the second door front edge rubber (**4**), with a linear shape pressure sensitive sensor (**5**A), which is sensitive to a pressure in the event of pinch, being disposed in that recessed portion (**30**), **characterized in that**
the pinch detection device includes a holding member (**6**), which holds the pressure sensitive sensor (**5**A) on an exterior of the first door front edge rubber and comprises an elastic body with a hollow portion (**60**) therein, with the pressure sensitive sensor (**5**A) disposed in the recessed portion (**30**) being accommodated and held **in that** hollow portion (**60**).

2. The pinch detection device according to claim **1**
wherein the holding member (**6**) integrally includes a base section (**61**), which is attached to a bottom surface (**30**a) of the recessed portion (**30**) and a cylindrical holding portion (**62**), which is formed with the hollow portion (**60**) in a central portion thereof, with a width of the base section (**61**) in a thickness direction of the one sliding door (**11**A) being wider than a width of the holding portion (**62**) in the same thickness direction, with the pressure sensitive sensor (**5**A) being positioned in the thickness direction of the one sliding door (**11**A) by the base section (**61**), with gaps being formed between the holding portion (**62**) and side surfaces (**30**b, **30**c), respectively, of the recessed portion (**30**).

3. The pinch detection device according to claim **1** or **2**, wherein the first door front edge rubber (**3**) includes a hollow space (**302**) in a vehicle exterior side relative to the recessed portion (**30**), with a linear shape pressure sensitive sensor (**5**C), which is sensitive to a pressure from the vehicle exterior side relative to the recessed portion (**30**), being disposed within that hollow space (**302**).

4. The pinch detection device (**2**) according to any one of claims **1** to **3**, wherein the first door front edge rubber (**3**) includes a hollow space (**302**) in a vehicle interior side relative to the recessed portion (**30**), with a linear shape pressure sensitive sensor (**5**C), which is sensitive to a pressure from the vehicle interior side relative to the recessed portion, being disposed within the hollow space (**302**).

5. The pinch detection device according to any one of claims **1** to **4**, wherein the second door front edge rubber (**4**) includes a protrusion (**411**) to be at least partially mated into the recessed portion during closing of the one pair of sliding doors.

6. The pinch detection device according to claim **5**, wherein the second door front edge rubber (**4**) includes a hollow space (**400**) in a rear position of the protrusion (**411**) in the closing movement direction of the other sliding door (**11B**), with a linear shape pressure sensitive sensor (**5D**), that is sensitive to a pressure from the protrusion (**411**) in the event of pinch in that closing movement direction, being disposed within that hollow space (**400**).

7. The pinch detection device according to claim **5** or **6**, wherein the second door front edge rubber (**4**) includes a hollow space (**401**) in the vehicle exterior side relative to a rear position of the protrusion (**411**) in the closing movement direction of the other sliding door (**11**B), with a linear shape pressure sensitive sensor, that is sensitive to a pressure from the vehicle exterior side relative to the protrusion (**411**), being disposed within that hollow space (**401**).

8. The pinch detection device according to any one of claims **5** to **7**, wherein the second door front edge rubber (**4**) includes a hollow space (**402**) in the vehicle interior side relative to the rear position of the protrusion (**411**) in the closing movement direction of the other sliding door (**11**B), with a linear shape pressure sensitive sensor (**5**F), that is sensitive to a pressure from the vehicle interior side relative to the protrusion (**411**), being disposed within that hollow space (**402**).

## Patentansprüche

1. Einklemm-Erkennungsvorrichtung (2) zum Erkennen des Auftretens einer Einklemmung während des Schließens eines Paares von Schiebetüren (11A, 11B), umfassend:
ein erstes Türvorderkantengummi (3), das an einem Kantenabschnitt in einer Schließbewegungsrichtung einer Schiebetür (11A) des einen Paares von Schiebetüren (11A, 11B) anzubringen ist; und
ein zweites Türvorderkantengummi (4), das an einem Kantenabschnitt in einer Schließbewegungsrichtung einer anderen Schiebetür (11B) des einen Paares von Schiebetüren (11A, 11B) zu befestigen ist,
wobei das erste Türvorderkantengummi (3) einen ausgesparten Abschnitt (30) aufweist, der zu dem zweiten Türvorderkantengummi (4) hin offen ist, wobei ein linear geformter druckempfindlicher Sensor (5A), der auf einen Druck im Falle einer Einklemmung anspricht, in diesem ausgesparten Abschnitt (30) angeordnet ist, **dadurch gekennzeichnet, dass**
die Einklemm-Erfassungsvorrichtung ein Halteelement (6) umfasst, das den druckempfindlichen Sensor (5A) an einer Außenseite des ersten Türvorderkantengummis hält und einen elastischen Körper mit einem hohlen Abschnitt (60) darin umfasst, wobei der in dem ausgesparten Abschnitt (30) angeordnete druckempfindliche Sensor (5A) in diesem hohlen Abschnitt (60) aufgenommen und gehalten wird.

2. Einklemm-Erkennungsvorrichtung nach Anspruch 1
wobei das Halteelement (6) einstückig einen Basisabschnitt (61), der an einer Bodenfläche (30a) des vertieften Abschnitts (30) befestigt ist, und einen zylindrischen Halteabschnitt (62) aufweist, der mit dem hohlen Abschnitt (60) in einem zentralen Abschnitt desselben ausgebildet ist, wobei eine Breite des Basisabschnitts (61) in einer Dickenrichtung der einen Schiebetür (11A) breiter ist als eine Breite des Halteabschnitts (62) in derselben Dickenrichtung, wobei der druckempfindliche Sensor (5A) in der Dickenrichtung der einen Schiebetür (11A) durch den Basisabschnitt (61) positioniert ist, wobei zwischen dem Halteabschnitt (62) und den Seitenflächen (30b, 30c) des vertieften Abschnitts (30) jeweils Lücken gebildet werden.

3. Einklemm-Erkennungsvorrichtung nach Anspruch 1 oder 2, wobei der erste Türvorderkantengummi (3) einen Hohlraum (302) in einer Fahrzeugaußenseite in Bezug auf den vertieften Abschnitt (30) aufweist, wobei ein linear geformter druckempfindlicher Sensor (5C), der auf einen Druck von der Fahrzeugaußenseite in Bezug auf den vertieften Abschnitt (30) anspricht, innerhalb dieses Hohlraums (302) angeordnet ist.

4. Einklemm-Erkennungsvorrichtung (2) nach einem der Ansprüche 1 bis 3, wobei der erste Türvorderkantengummi (3) einen Hohlraum (302) in einer Fahrzeuginnenseite relativ zu dem vertieften Abschnitt (30) aufweist, wobei ein linear geformter druckempfindlicher Sensor (5C), der auf einen Druck von der Fahrzeuginnenseite relativ zu dem vertieften Abschnitt anspricht, innerhalb des Hohlraums (302) angeordnet ist.

5. Einklemm-Erkennungsvorrichtung nach einem der Ansprüche 1 bis 4, wobei der zweite Türvorderkantengummi (4) einen Vorsprung (411) aufweist, der beim Schließen des einen Schiebetürpaares zumindest teilweise in den ausgesparten Abschnitt eingreift.

6. Einklemm-Erkennungsvorrichtung nach Anspruch 5, wobei das zweite Türvorderkantengummi (4) einen Hohlraum (400) in einer hinteren Position des Vorsprungs (411) in der Schließbewegungsrichtung der anderen Schiebetür (11B) aufweist, wobei ein linear geformter druckempfindlicher Sensor (5D), der auf einen Druck von dem Vorsprung (411) im Falle einer Einklemmung in dieser Schließbewegungsrichtung anspricht, innerhalb dieses Hohlraums (400) angeordnet ist.

7. Einklemm-Erkennungsvorrichtung nach Anspruch 5 oder 6, wobei der zweite Türvorderkantengummi (4) einen Hohlraum (401) in der Fahrzeugaußenseite relativ zu einer hinteren Position des Vorsprungs (411) in der Schließbewegungsrichtung der anderen Schiebetür (11B) aufweist, wobei ein linear geformter druckempfindlicher Sensor, der auf einen Druck von der Fahrzeugaußenseite relativ zu dem Vorsprung (411) anspricht, innerhalb dieses Hohlraums (401) angeordnet ist.

8. Einklemm-Erkennungsvorrichtung nach einem der Ansprüche 5 bis 7, wobei der zweite Türvorderkantengummi (4) einen Hohlraum (402) in der Fahrzeuginnenseite relativ zur hinteren Position des Vorsprungs (411) in der Schließbewegungsrichtung der anderen Schiebetür (11B) aufweist, wobei ein linear geformter druckempfindlicher Sensor (5F), der auf einen Druck von der Fahrzeuginnenseite relativ zum Vorsprung (411) anspricht, innerhalb dieses Hohlraums (402) angeordnet ist.

## Revendications

1. Un dispositif (2) de détection de pincement, pour détecter la survenance d'un pincement lors de la fermeture d'une paire de portes coulissantes (11A, 11B), comprenant :
un premier caoutchouc (3) de bord avant de porte destiné à être fixé à une partie de bord dans une direction de mouvement de fermeture d'une porte coulissante (11A) de la paire de portes coulissantes (11A, 11B) ; et
un deuxième caoutchouc (4) de bord avant de porte destiné à être fixé à une partie de bord dans une direction de mouvement de fermeture d'une autre porte coulissante (11B) de la paire de portes coulissantes (11A, 11B),
le premier caoutchouc (3) de bord avant de porte comprenant une partie (30) en renfoncement, qui est ouverte vers le deuxième caoutchouc (4) de bord avant de porte, avec un capteur (5A) de forme linéaire, sensible à la pression, qui est sensible à une pression dans le cas d'une pincement, étant disposé dans cette partie en renfoncement (30), **caractérisé en ce que**
le dispositif de détection de pincement comprend un élément de maintien (6), qui maintient le capteur (5A) sensible à la pression sur un extérieur du premier caoutchouc de bord avant de porte et qui comprend un corps élastique ayant une partie creuse (60) à l'intérieur de lui, le capteur (5A) sensible à la pression étant disposé dans la partie en renfoncement (30) en étant logé et maintenu dans cette partie creuse (60).

2. Le dispositif de détection de pincement selon la revendication 1,
dans lequel l'élément de maintien (6) comprend une portion de base (61) formant corps avec lui, qui est fixée à une surface inférieure (30a) de la partie en renfoncement (30) et une partie cylindrique (62) de maintien, qui est formée avec la partie creuse (60) dans une partie centrale d'elle-même, une largeur de la portion de base (61) dans une direction d'épaisseur de ladite une porte coulissante (1 1A) étant plus large qu'une largeur de la partie de maintien (62) dans la même direction d'épaisseur, le capteur (5A) sensible à la pression étant positionné dans la direction d'épaisseur de la porte coulissante (11A) par la portion de base (61), des espaces étant formés entre la partie de maintien (62) et des surfaces latérales (30b, 30c), respectivement, de la partie en renfoncement (30).

3. Le dispositif de détection de pincement selon la revendication 1 ou la revendication 2, dans lequel le premier caoutchouc (3) de bord avant de porte comprend un espace creux (302) dans un côté extérieur du véhicule par rapport à la partie en renfoncement (30), un capteur (5C) de forme linéaire, sensible à la pression, qui est sensible à une pression depuis le côté extérieur du véhicule par rapport à la partie en renfoncement (30), étant disposé à l'intérieur de cet espace creux (302).

4. Le dispositif (2) de détection de pincement selon l'une quelconque des revendications 1 à 3, dans lequel le premier caoutchouc (3) de bord avant de porte comprend un espace creux (302) dans un côté intérieur du véhicule par rapport à la partie en renfoncement (30), un capteur (5C) de forme linéaire, sensible à la pression, qui est sensible à une pression du côté intérieur du véhicule par rapport à la partie en renfoncement, étant disposé à l'intérieur de l'espace creux (302).

5. Le dispositif de détection de pincement selon l'une quelconque des revendications 1 à 4, dans lequel le deuxième caoutchouc (4) de bord avant de porte comprend une protubérance (411) devant être au moins partiellement reliée dans la partie en renfoncement lors de la fermeture de ladite une paire de portes coulissantes.

6. Le dispositif de détection de pincement selon la revendication 5, dans lequel le deuxième caoutchouc (4) de bord avant de porte comprend un espace creux (400) dans une position arrière de la protubérance (411) dans la direction du mouvement de fermeture de l'autre porte coulissante (11B), un capteur (5D) de forme linéaire, sensible à la pression, qui est sensible à une pression de la protubérance (411) en cas de pincement dans cette direction de mouvement de fermeture, étant disposé à l'intérieur de cet espace creux (400).

7. Le dispositif de détection de pincement selon la revendication 5 ou la revendication 6, dans lequel le deuxième caoutchouc (4) de bord avant de porte comprend un espace creux (401) dans le côté extérieur du véhicule par rapport à une position arrière de la protubérance (411) dans la direction du mouvement de fermeture de l'autre porte coulissante (11B), un capteur de forme linéaire, sensible à la pression, qui est sensible à une pression depuis le côté extérieur du véhicule par rapport à la protubérance (411), étant disposé à l'intérieur de cet espace creux (401).

8. Le dispositif de détection de pincement selon l'une quelconque des revendications 5 à 7, dans lequel le deuxième caoutchouc (4) de bord avant de porte comprend un espace creux (402) dans le côté intérieur du véhicule par rapport à la position arrière de la protubérance (411) dans la direction de mouvement de fermeture de l'autre porte coulissante (11B), un capteur (5F) de forme linéaire, sensible à la pression, qui est sensible à une pression du côté intérieur du véhicule par rapport à la protubérance (411), étant disposé à l'intérieur de cet espace creux (402).
